# EUROPEAN PATENT SPECIFICATION

(11) **EP 3 413 511 B1**
(45) Date of publication and mention of the grant of the patent: **04.11.2020**
(21) Application number: 16899765.8
(22) Date of filing: 27.04.2016
(51) Int. Cl.: H04L 12/24

(54) **VNFM DETERMINING METHOD AND NETWORK FUNCTION VIRTUALIZATION ORCHESTRATOR**
VERFAHREN ZUR VNFM-BESTIMMUNG UND ORCHESTRATOR FÜR NETZWERKFUNKTIONSVIRTUALISIERUNG
PROCÉDÉ DE DÉTERMINATION DE VNFM ET ORCHESTRATEUR DE VIRTUALISATION DE FONCTION DE RÉSEAU

(43) Date of publication of application: 12.12.2018
(73) Proprietor: Huawei Technologies Co., Ltd., Longgang District Shenzhen, Guangdong 518129 (CN)
(72) Inventor: YU, Fang, Shenzhen Guangdong 518129 (CN); YANG, Xu, Shenzhen Guangdong 518129 (CN); XIA, Haitao, Shenzhen Guangdong 518129 (CN)
(74) Representative: Gill Jennings & Every LLP
(86) International application number: PCT/CN2016/080333
(87) International publication number: WO 2017/185251

(56) References cited:
- WO-A1-2016/048430
- CN-A- 105 282 765
- CN-A- 105 429 776
- CN-A- 105 429 839
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740,
- ERICSSON LM: "Draft GS NFV-IFA009v070 Contribution", ETSI DRAFT; NFVIFA(16)000417, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. - NFV IFA - Interfaces and Architecture 4 April 2016 (2016-04-04), pages 1-30, XP014270527, Retrieved from the Internet: URL:docbox.etsi.org\ISG\NFV\IFA\05-CONTRIB UTIONS\2016\2016_04_06_WG_NFVIFA-Stream1a# 33\NFVIFA(16)?000417_Draft_GS_NFV-IFA009v0 70_Contribution\NFV-IFA009v070-cm.doc [retrieved on 2016-04-04]
- "Network Functions Virtualisation (NFV); Architectural Framework;ETSI GS NFV 002", ETSI DRAFT; ETSI GS NFV 002, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V1.1.2, 24 November 2014 (2014-11-24), pages 1-21, XP014222451, [retrieved on 2014-11-24]
- "Network Functions Virtualisation (NFV); Management and Orchestration; Functional requirements specification", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV IFA, no. V2.1.1, 1 April 2016 (2016-04-01), XP014274010,
- HUAWEI TECH (UK) CO ET AL: "IFA008 9.3.1 Vnfinfo information element", ETSI DRAFT; NFVIFA(16)000249R1, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. - NFV IFA - Interfaces and Architecture 9 March 2016 (2016-03-09), pages 1-2, XP014269461, Retrieved from the Internet: URL:docbox.etsi.org\ISG\NFV\IFA\05-CONTRIB UTIONS\2016\NFVIFA(16)000249r1_IFA008_9_3_ 1_Vnfinfo_information_element.doc [retrieved on 2016-03-09]

## Description

### TECHNICAL FIELD

The present invention relates to communications technologies, and in particular, to a virtualized network function manager (VNF Manager, VNFM for short) determining method and a network functions virtualization orchestrator.

### BACKGROUND

In Network Functions Virtualization (Network Function Virtualization, NFV for short), software processing of massive functions is born by using general purpose hardware and a virtualization technology, to reduce expensive equipment costs of a network. Software and hardware decoupling and functional abstraction may be used, so that a network device function is no longer dependent on dedicated hardware, resources can be fully and flexibly shared, a new service is quickly developed and deployed, and automatic deployment, flexible scaling, fault isolation, self-healing, and the like are performed based on an actual service requirement.

The NFV system includes management and orchestration (Management and Orchestration, MANO for short). The MANO includes a network functions virtualization orchestrator (NFV Orchestrator, NFVO for short) and a virtualized network function manager (Virtualized Network Function Manager, VNFM for short). The VNFM is responsible for a virtualized network function (Virtualized Network Function, VNF for short) instance life cycle management such as a time to start, a time to live, and VNF operating status information. Currently, the NFV system is in an initial phase, and therefore an NFV system structure is relatively simple, and there is only one VNFM in a management domain of each NFVO. When receiving a VNF instantiation request, the NFVO directly forwards the VNF instantiation request to the VNFM.

However, with expansion of the NFV system, a quantity of VNFMs in the management domain of each NFVO definitely increases. In this case, when the NFVO management domain of each NFVO definitely increases. In this case, when the NFVO receives the VNF instantiation request, VNF instantiation cannot be completed.

ETSI GS NFV-MAN 001 V1.1.1 (2014-12) describes the management and orchestration framework required for the provisioning of virtualized network functions (VNF), and the related operations, such as the configuration of the virtualized network functions and the infrastructure these functions run on. The document addresses the following topics of management and orchestration: architecture framework for management and orchestration of NFV, information elements, interfaces, provisioning, configuration, and operational management, including interworking with existing operations and management systems.

### SUMMARY

Embodiments of the present invention provide a VNFM determining method and a network functions virtualization orchestrator, so that when receiving a VNF instantiation request, the NFVO can determine a VNFM that is configured to manage a to-be-instantiated VNF.

A first aspect of the present invention provides a VNFM determining method according to claim 1.

A second aspect of the present invention provides an NFVO according to claim 7.

According to the VNFM determining method and the network functions virtualization orchestrator provided in the embodiments of the present invention, when receiving the first VNF instantiation request that is used to request to instantiate the to-be-instantiated VNF, the NFVO determines, according to the first VNF instantiation request from the VNFMs in the management domain of the NFVO, the VNFM managing the to-be-instantiated VNF; and sends the second VNF instantiation request to the determined VNFM, where the second VNF instantiation request is used to request to instantiate the to-be-instantiated VNF, so as to implement selection of a correct VNFM for the VNF, thereby ensuring that VNF deployment and life cycle management are performed correctly and highly efficiently.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and a person of ordinary skill in the art may derive other drawings from these accompanying drawings without creative efforts.
FIG. 1 is a schematic architectural diagram of an NFV system;
FIG. 2 is a flowchart of a VNFM determining method according to Embodiment 1 of the present invention;
FIG. 3 is a flowchart of a VNFM determining method according to Embodiment 2 of the present invention;
FIG. 4 is a flowchart of a VNFM determining method according to Embodiment 3 of the present invention;
FIG. 5 is a flowchart of a VNFM determining method according to Embodiment 4 of the present invention;
FIG. 6 is a flowchart of a VNFM determining method according to Embodiment 5 of the present invention;
FIG. 7 is a flowchart of a VNFM determining method according to Embodiment 6 of the present invention;
FIG. 8 is a flowchart of a VNFM determining method according to Embodiment 7 of the present invention;
FIG. 9 is a schematic structural diagram of an NFVO according to Embodiment 8 of the present invention; and
FIG. 10 is a schematic structural diagram of an NFVO according to Embodiment 9 of the present invention.

### DESCRIPTION OF EMBODIMENTS

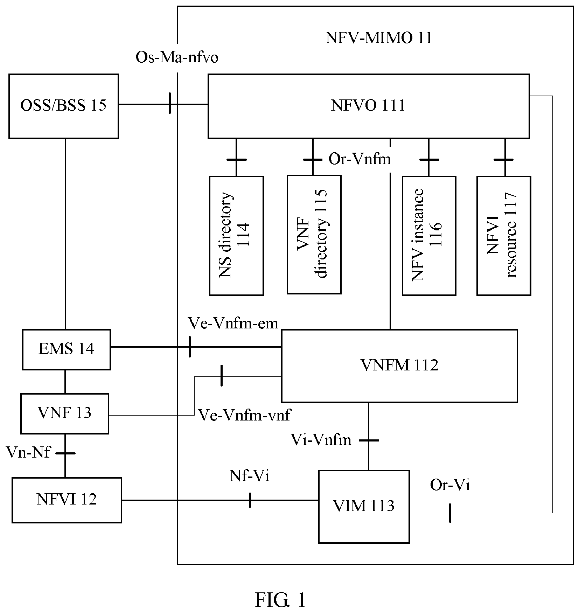

The method of the embodiments of the present invention is applied to an NFV system. FIG. 1 is a schematic architectural diagram of the NFV system. As shown in FIG. 1, the NFV system architecture includes: an NFV-MIMO 11, a network function virtualization infrastructure (Network Function Virtualization Infrastructure, NFVI for short) 12, a virtualized network function (Virtualized Network Function, VNF for short) 13, an element management system (Element Management System, EMS for short) 14, and an operation support system/business support system (Operation Support System/Business Support System, OSS/BSS for short) 15. There may be one or more VNFs 13, EMSs 14, and OSSs/BSSs 15.

The NFV-MANO 11 may include an NFVO 111, one or more VNFMs 112, and one or more virtualized infrastructure managers (Virtualized Infrastructure Manager, VIM) 113. An NFVO is responsible for network service (Network Service, NS for short) life cycle management based on an OSS/BSS service request, orchestrating and managing resources to implement an NFV service and monitor a VNF or NFVI resource and running status information thereof in real time. Data of the NFV-MANO 11 is stored in four repositories: an NS directory 114, a VNF directory 115, an NFV instance 116, and an NFVI resource 117. The NS directory 114 includes a loaded NSD. The VNF directory 115 includes loaded a VNF package. The NFV instance 116 includes a running NS instance and VNF instance. The NFVI resource 117 includes an NFVI resource state such as an available/reserved/allocated NFVI resource.

The VNFM 112 may be used to manage one or more VNFs 13, and perform various management functions such as initiating, updating, querying, and/or terminating the VNF 13. The VIM 113 may be used to control and manage the VNF 13.

The NFVI 12 may include: a hardware resource layer including computing hardware, storage hardware, and network hardware; a virtualization layer; and a virtual resource layer including virtual computing (for example, a virtual machine), virtual storage, and a virtual network.

The computing hardware at the hardware resource layer may be a dedicated processor or a general purpose processor that is configured to provide processing and computing functions, for example, a central processing unit (Central Process Unite, CPU for short). The storage hardware is configured to provide a storage capability, for example, a disk or network attached storage (Network Attached Storage, NAS). The network hardware may be a switch, a router, and/or another network device.

The virtualization layer in the NFVI 12 is used to: abstract a hardware resource of the hardware resource layer, decouple the VNF 13 and a physical layer to which the hardware resource belongs, and provide a virtual resource for the VNF.

The virtual resource layer may include virtual computing, virtual storage, and a virtual network. The virtual computing and the virtual storage may be provided for the VNF 13 in a form of a virtual machine or another virtual container. For example, one VNF includes one or more virtual machines. The virtualization layer forms the virtual network by using abstract network hardware. The virtual network is used to implement communication between a plurality of virtual machines or between a plurality of virtual containers of another type that bear the VNF. Creation of the virtual network may be implemented by using a technology such as a virtual LAN (Virtual LAN, VLAN for short), a virtual private LAN service (Virtual Private LAN Service, VPLS for short), a Virtual Extensible Local Area Network (Virtual Extensible Local Area Network, VXLAN for short), or a Network Virtualization using Generic Routing Encapsulation (Network Virtualization using Generic Routing Encapsulation, NVGRE for short).

The VNF 13 is corresponding to a physical network function (Physical Network Function, PNF for short) in a conventional non-virtualization network, for example, a virtualized evolved packet core (Evolved Packet Core, EPC for short) node. The virtualized EPC node includes: a mobility management entity (Mobility Management Entity, MME for short), a serving gateway (Serving GateWay, SGW for short), a packet data network gateway (Packet Data Network GateWay, PGW for short), and the like. A functional behavior and a state of the network are unrelated to whether the network is virtualized. In the NFV system, the VNF and the PNF have the same functional behavior and external interface.

The EMS14 may be configured to manage one or more VNFs 13, and mainly performs, for the VNF 13, conventional fault management, configuration management, accounting management, performance management, security management (Fault Management, Configuration Management, Accounting Management, Performance Management, Security Management, FCAPS for short) functions.

The OSS/BSS 15 mainly provides, for a telecommunications service operator, integrated network management and service operation functions, including network management (for example, fault monitoring and network information collection), accounting management, customer service management, and the like.

The NFV system mainly includes the following related interfaces:
Ve-Vnfm: used for VNF life cycle management and exchanging configuration information;
Or-Vnfm: used to request a resource for VNF life cycle management, send configuration information, and collect state information;
Vi-Vnfm: used for a resource allocation request, virtualization resource configuration, and exchanging state information;
Or-Vi: used for a resource reservation or allocation request, virtualization resource configuration, and exchanging state information;
Nf-Vi: used for specific resource allocation, exchanging virtualization resource state information, and hardware resource configuration;
Vn-Nf: used by an NFVI to provide an actual execution environment for a VNF;
VI-Ha: A virtualization layer requests a hardware resource and collects hardware resource state information by using the interface;
Oi-Vi: used for a resource reservation request, a resource allocation request, virtualization hardware configuration, and exchanging state information;
Se-Ma: used to retrieve VNF forwarding graph information, service-related information, and the like;
Os-Ma: used for VNF life cycle management, NS life cycle management, policy management, and the like.

In actual NFV-MANO application, two VNFM deployment scenarios are supported: G-VNFM and S-VNFM. The G-VNFM may manage different types of VNFs provided by different vendors. Both the S-VNFM and the VNF are provided by the vendor, and the S-VNFM may manage only VNFs provided by a same vendor. For one NFVO, there may be a plurality of VNFMs in a management domain of the NFVO. The plurality of VNFMs may include the G-VNFM and the S-VNFM. When there are a plurality of VNFMs in the management domain of the NFVO, how the NFVO selects a correct VNFM for the VNF is not specified in the prior art. If the NFVO cannot select a correct VNFM for the VNF, a VNF instantiation operation cannot be completed.

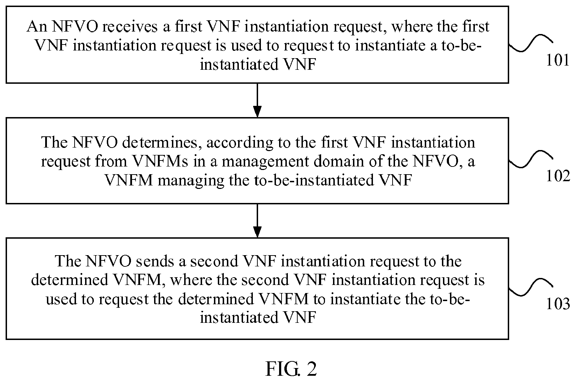

Embodiment 1 of the present invention provides a VNFM determining method. FIG. 2 is a flowchart of the VNFM determining method according to Embodiment 1 of the present invention. As shown in FIG. 2, the method provided in this embodiment may include the following steps.

Step 101: An NFVO receives a first VNF instantiation request, where the first VNF instantiation request is used to request to instantiate a to-be-instantiated VNF.

The VNF instantiation request may be sent by an OSS or a BSS. The VNF instantiation request may include some feature parameters of the to-be-instantiated VNF, for example, an identifier of the to-be-instantiated VNF, a type of the to-be-instantiated VNF, and virtual resources required by the to-be-instantiated VNF (a computing resource, a storage resource, and a network resource).

Step 102: The NFVO determines, according to the first VNF instantiation request from VNFMs in a management domain of the NFVO, a VNFM managing the to-be-instantiated VNF.

In this embodiment, the management domain of the NFVO includes one or more VNFMs, and the NFVO selects a correct VNFM for the to-be-instantiated VNF based on information included in the instantiation request. Different VNFMs manage different types of VNFs, and an S-VNFM can manage a VNF only from a same vendor as that of the S-VNFM. If a same vendor provides a plurality of S-VNFMs, the plurality of S-VNFMs provided by the same vendor separately manage different types of VNFMs. A correct VNFM needs to be selected for the to-be-instantiated VNF based on the type, the vendor, or other parameters of the to-be-instantiated VNF.

In an implementation, the VNF instantiation request carries some information that is used by the NFVO to determine the VNFM managing the to-be-instantiated VNF. The NFVO determines, based on the information carried in the VNF instantiation request, the VNFM managing the to-be-instantiated VNF. In another implementation, the VNF instantiation request does not carry the information that is used by the NFVO to determine the VNFM managing the to-be-instantiated VNF. The VNF instantiation request only triggers the NFVO to select, in a preset manner, the VNFM managing the to-be-instantiated VNF.

Step 103: The NFVO sends a second VNF instantiation request to the determined VNFM, where the second VNF instantiation request is used to request the determined VNFM to instantiate the to-be-instantiated VNF.

The NFVO sends the second VNF instantiation request to the determined VNFM, so that the determined VNFM to instantiate the to-be-instantiated VNF. Optionally, the NFVO may further store a correspondence between the identifier of the to-be-instantiated VNF and an identifier of the determined VNFM. After the instantiation is completed, the VNFM is further configured to manage a life cycle of the to-be-instantiated VNF. Therefore, the correspondence between the VNF and the VNFM also needs to be used in a subsequent process.

Optionally, the first VNF instantiation request is the same as the second VNF instantiation request, or the first VNF instantiation request is different from the second VNF instantiation request. When the first VNF instantiation request is different from the second VNF instantiation request, after receiving the first VNF instantiation request, the NFVO may process the first VNF instantiation request to obtain the second VNF instantiation request.

According to the method in this embodiment, after receiving the first VNF instantiation request, the NFVO may determine, for the to-be-instantiated VNF based on the VNF instantiation request from the VNFMs in the management domain of the NFVO, a VNFM used to manage the VNFM. This resolves a prior-art problem that the NFVO cannot select the VNFM for the VNF when there are a plurality of VNFMs in the management domain of the NFVO.

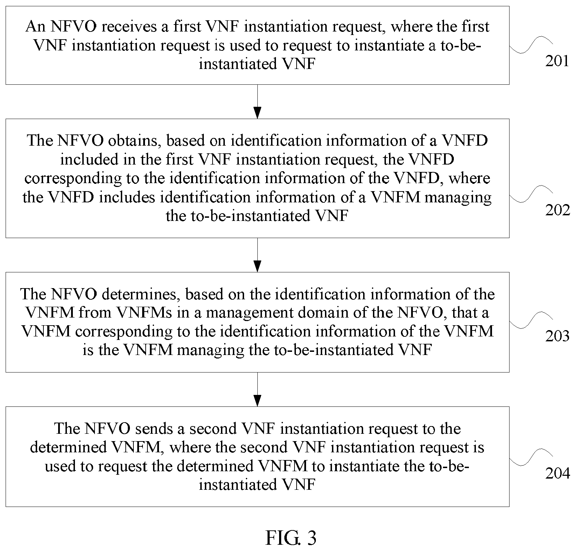

FIG. 3 is a flowchart of a VNFM determining method according to Embodiment 2 of the present invention. The method in this embodiment is mainly used for S-VNFM determining. As shown in FIG. 3, the method in this embodiment may include the following steps.

Step 201: An NFVO receives a first VNF instantiation request, where the first VNF instantiation request is used to request to instantiate a to-be-instantiated VNF.

The VNF instantiation request includes identification information of a virtualized network function descriptor (virtualized network function descriptor, VNFD for short), and the VNFD is used to instantiate the to-be-instantiated VNF.

Step 202: The NFVO obtains, based on identification information of a VNFD included in the first VNF instantiation request, the VNFD corresponding to the identification information of the VNFD, where the VNFD includes identification information of a VNFM managing the to-be-instantiated VNF.

The NFVO may request, from an OSS, a BSS, or an EMS, to obtain the VNFD corresponding to the identification information of the VNFD. The VNFD includes the identification information of the VNFM of the to-be-instantiated VNF. Certainly, the VNFD further includes other information, and only information related to this embodiment of the present invention is enumerated in this embodiment.

Table 1 describes information elements (Information Element, IE for short) included in the VNFD. As shown in Table 1, the VNFD includes five IEs in total: Attribute (attribute), Qualifier (qualifier), Cardinality (cardinality), Content (content), and Description (description). Values of the IEs are shown in Table 1. It may be seen from Table 1 that a function of an identifier of the VNFM of the to-be-instantiated VNF is described in the VNFD used to instantiate the to-be-instantiated VNF, that is, the identification information of the VNFM can uniquely identify one VNFM.

**Table 1**

| **Attribute** | **Qualifier** | **Cardinality** | **Content** | **Description** |
|---|---|---|---|---|
| vnfmId | M | 0..N | Identifier | Unique identifier of the VNFM which manages this VNF. |
| | | | | Only present if the VNF should be managed by a vendor-specific VNFM. |

In this embodiment, the identification information of the VNFM managing the to-be-instantiated VNF includes: a first identifier or a second identifier that is of the VNFM of the to-be-instantiated VNF. The first identifier is generated by a vendor of the VNFM of the to-be-instantiated VNF according to a rule made by an operator, and the first identifier is used to uniquely identify the VNFM of the to-be-instantiated VNF in a management domain of the operator. That is, each operator makes a VNFM identifier generation rule, and then provides the VNFM identifier generation rule made by each operator for the vendor of the VNFM. When providing the VNFM for the operator, the vendor of the VNFM generates a VNFM identifier according to the VNFM identifier generation rule made by the operator. The first identifier can uniquely identify the VNFM only in the management domain of the operator, and some VNFM identifiers of different operators may be the same.

The second identifier is a universally unique identifier (Universally Unique Identifier, UUID for short), and the second identifier is used to uniquely identify the VNFM globally.

Step 203: The NFVO determines, based on the identification information of the VNFM from VNFMs in a management domain of the NFVO, that a VNFM corresponding to the identification information of the VNFM is the VNFM managing the to-be-instantiated VNF.

The NFVO stores identification information of each VNFM in the management domain of the NFVO. After obtaining the identification information of the VNFM of the to-be-instantiated VNF, the NFVO queries, based on the locally stored identification information of the VNFM, a VNFM corresponding to the obtained identification information of the VNFM managing the to-be-instantiated VNF, and determines the obtained VNFM as the VNFM managing the to-be-instantiated VNF.

It should be noted that the VNFD may include identification information of one or more VNFMs, that is, one or more VNFMs that can manage the to-be-instantiated VNF may exist in the management domain of the NFVO. When a plurality of VNFMs that can manage the to-be-instantiated VNF exist in the management domain of the NFVO, the VNFD may include identifiers of the plurality of VNFMs that can manage the to-be-instantiated VNF, and the NFVO may select, from a plurality of VNFMs according to a preset rule, one VNFM as the VNFM managing the to-be-instantiated VNF. For example, the NFVO may select, based on a load status of each VNFM, a VNFM with less load as the VNFM managing the to-be-instantiated VNF.

Step 204: The NFVO sends a second VNF instantiation request to the determined VNFM, where the second VNF instantiation request is used to request the determined VNFM to instantiate the to-be-instantiated VNF.

According to the method in this embodiment, an identifier is set for each VNFM. When the NFVO receives the first VNF instantiation request, the NFVO obtains the VNFD, and determines the VNFM based on the VNFM identification information specified by the vendor of the VNF in the VNFD. This can ensure that a capability of the VNFM managing the VNF meets all requirements of the vendor of the VNF, thereby ensuring that VNF deployment and life cycle management are performed correctly and highly efficiently.

Based on Embodiment 2, optionally, the VNFD includes a third identifier of the VNFM of the to-be-instantiated VNF and vendor information of the to-be-instantiated VNF. The third identifier is generated by the vendor of the to-be-instantiated VNF according to the rule made by the vendor, and the third identifier is used to uniquely identify the VNFM in a management domain of the vendor. Each operator makes a VNFM identifier generation rule independently, and consequently, third identifiers of the VNFM in the management domain of different operators may be the same, and the third identifier cannot uniquely identify one VNFM in the management domain of the NFVO. Therefore, the VNFD further includes vendor information of the to-be-instantiated VNF. In an S-VNFM scenario, both the VNF and the VNFM are provided by the operator, a vendor of the VNF is a vendor of the VNFM, and therefore, one VNFM can be uniquely identified in the management domain of the NFVO based on the third identifier and the vendor of the VNF.

Correspondingly, the NFVO determines, based on the third identifier of the VNFM and the vendor information of the to-be-instantiated VNF from VNFMs in the management domain of the NFVO, the VNFM managing the to-be-instantiated VNF. Specifically, the NFVO stores a third identifier of each VNFM in the management domain of the NFVO and vendor information of the VNF. The NFVO may determine, based on the third identifier of the VNFM managing the to-be-instantiated VNF and the vendor information of the to-be-instantiated VNF, the VNFM managing the to-be-instantiated VNF.

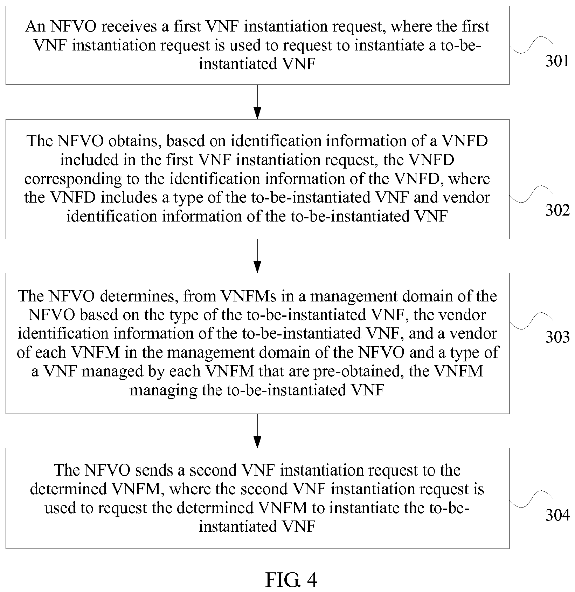

FIG. 4 is a flowchart of a VNFM determining method according to Embodiment 3 of the present invention. As shown in FIG. 4, the method in this embodiment may include the following steps.

Step 301: An NFVO receives a first VNF instantiation request, where the first VNF instantiation request is used to request to instantiate a to-be-instantiated VNF.

In this embodiment, the first VNF instantiation request includes identification information of a VNFD that is used to instantiate the to-be-instantiated VNF.

Step 302: The NFVO obtains, based on identification information of a VNFD included in the first VNF instantiation request, the VNFD corresponding to the identification information of the VNFD, where the VNFD includes a type of the to-be-instantiated VNF and vendor identification information of the to-be-instantiated VNF.

The VNFD includes the type of the to-be-instantiated VNF and the vendor identification information. The type of the VNF is defined by a vendor of the VNF, and the vendor of the VNF is a vendor providing the VNF. The type of the VNF may be a type of a network element such as an MME, a PGW, or another type such as an EPC network element or an IMS network element.

Table 2 describes IEs included in the VNFD. As shown in Table 2, the VNFD includes five IEs in total: Attribute, Qualifier, Cardinality, Content, and Description. Values of the IEs are shown in Table 2. It may be seen from Table 2 that a VNFD corresponding to the to-be-instantiated VNF describes a type and a vendor of the to-be-instantiated VNF.

**Table 2**

| **Attribute** | **Qualifier** | **Cardinality** | **Content** | **Description** |
|---|---|---|---|---|
| vendor | M | 1 | Identifier | The vendor generating this VNFD. |
| vnfType | M | 0..1 | String | The type of this VNF. |

Step 303: The NFVO determines, from VNFMs in a management domain of the NFVO based on the type of the to-be-instantiated VNF, the vendor identification information of the to-be-instantiated VNF, and a vendor of each VNFM in the management domain of the NFVO and a type of a VNF managed by each VNFM that are pre-obtained, the VNFM managing the to-be-instantiated VNF.

In an S-VNFM deployment scenario, for the to-be-instantiated VNF, a vendor of the VNFM managing the to-be-instantiated VNF needs to be the same as that of the to-be-instantiated VNF, and the type of the to-be-instantiated VNF is one of types of the VNFs managed by the VNFM managing the to-be-instantiated VNF. Each VNFM may manage one or more types of VNFs.

In this embodiment, the NFVO may obtain the vendor of each VNFM in the management domain of the NFVO and the type of the VNF managed by each VNFM in the following two manners:
In an implementation, the type of the VNF managed by each VNFM in the management domain of the NFVO is pre-configured. When providing the VNFM, the vendor of the VNF indicates the type of the VNF that can be managed by the VNFM, and the NFVO records the vendor of the VNFM and the type of the VNF managed by the VNFM.

In another implementation, the NFVO queries, from each VNFM in the management domain, the type of the VNF managed by each VNFM; or the NFVO receives a type that is of a VNF managed by each VNFM and that is reported by each VNFM in the management domain.

It should be noted that each vendor may provide a plurality of VNFMs, and some types of VNFs managed by the plurality of VNFMs may be the same. Therefore, there may be a plurality of VNFMs, in the management domain of the NFVO, that are from a same vendor as that of the to-be-instantiated VNF and that manages a VNF whose type is the same as that of the to-be-instantiated VNF. When there are a plurality of VNFMs, in the management domain of the NFVO, that are from a same vendor as that of the to-be-instantiated VNF and that manages a VNF whose type is the same as that of the to-be-instantiated VNF, the NFVO may select, according to the preset rule from a plurality of VNFMs that meet a condition, one VNFM to manage the to-be-instantiated VNF. For example, the NFVO may select, based on a load status of each VNFM, a VNFM with less load as the VNFM managing the to-be-instantiated VNF.

Step 304: The NFVO sends a second VNF instantiation request to the determined VNFM, where the second VNF instantiation request is used to request the determined VNFM to instantiate the to-be-instantiated VNF.

According to the method in this embodiment, the NFVO obtains the vendor of each VNFM in the management domain and the type of the VNF managed by each VNFM. When the NFVO receives the first VNF instantiation request, the NFVO obtains the VNFD, and determines, from the VNFMs in the management domain of the NFVO based on the type of the to-be-instantiated VNF included in the VNFD and vendor information, that a VNFM that is from a same vendor as that of the to-be-instantiated VNF and that manages a VNF whose type is the same as that of the to-be-instantiated VNF. The VNFM is determined based on the VNF type and the VNF vendor, and therefore, it can be ensured that the VNF type that can be managed by the selected VNFM matches the VNF type, and VNF deployment and VNF life cycle management are performed correctly and efficiently, and in addition, the NFVO may select one VNFM based on internal settings from several VNFMs meeting the requirements to implement load balancing between VNFMs.

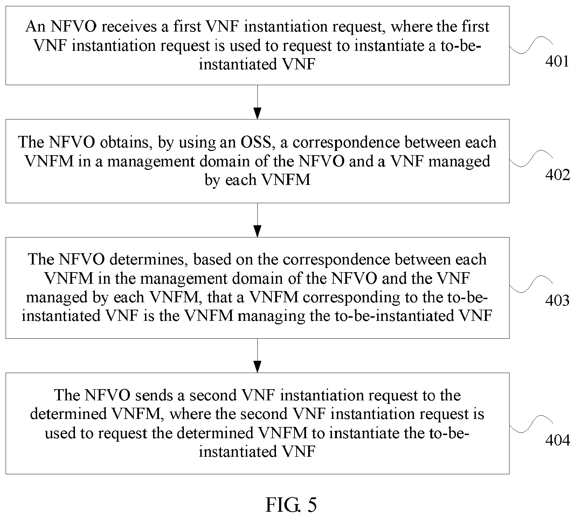

FIG. 5 is a flowchart of a VNFM determining method according to Embodiment 4 of the present invention. The method in this embodiment is mainly used for S-VNFM determining. As shown in FIG. 5, the method in this embodiment may include the following steps.

Step 401: An NFVO receives a first VNF instantiation request, where the first VNF instantiation request is used to request to instantiate a to-be-instantiated VNF.

Step 402: The NFVO obtains, by using an OSS, a correspondence between each VNFM in a management domain of the NFVO and a VNF managed by each VNFM.

In an implementation, the NFVO sends a VNFM capability query request to the OSS, where the VNFM capability query request is used to request to query the correspondence between each VNFM in the management domain of the NFVO and the VNF managed by each VNFM. The OSS stores the correspondence between the VNF and the VNFM managing the VNF. The correspondence may be collected by the OSS from an EMS, or sent by the EMS to the OSS. For one VNF, there may be only one VNFM that can manage the VNF, or there may be a plurality of VNFMs that can manage the VNF. After the OSS receives the VNFM capability query request sent by the NFVO, the correspondence between each VNFM in the management domain of the NFVO and the VNF managed by each VNFM is carried in a query response and is sent to the NFVO. The NFVO receives the query response returned by the OSS, and obtains the correspondence between each VNFM in the management domain of the NFVO and the VNF managed by each VNFM. The NFVO may periodically send the VNFM capability query request to the OSS, or may send the VNFM capability query request to the OSS when receiving the first VNF instantiation request.

In another implementation, the NFVO receives the correspondence that is reported by the OSS and that is between each VNFM in the management domain of the NFVO and the VNF managed by each VNFM. The OSS may periodically report the correspondence, or may report the correspondence when a specific triggering condition is met. For example, the OSS reports the correspondence only when the correspondence between each VNFM in the management domain of the NFVO and the VNF managed by each VNFM is updated.

It should be noted that there is no execution order between step 401 and step 402.

Step 403: The NFVO determines, based on the correspondence between each VNFM in the management domain of the NFVO and the VNF managed by each VNFM, that a VNFM corresponding to the to-be-instantiated VNF is the VNFM managing the to-be-instantiated VNF.

Based on the correspondence, if there is only one VNFM that can manage the to-be-instantiated VNF, the NFVO directly determines the VNFM as the VNFM managing the to-be-instantiated VNF; or if there are a plurality of VNFMs that can manage the to-be-instantiated VNF, the NFVO selects, from the plurality of VNFMs, one VNFM managing the to-be-instantiated VNF.

Step 404: The NFVO sends a second VNF instantiation request to the determined VNFM, where the second VNF instantiation request is used to request the determined VNFM to instantiate the to-be-instantiated VNF.

In this embodiment, the OSS stores the correspondence between each VNFM in the management domain of the NFVO and the VNF managed by each VNFM. When the NFVO obtains, by using the OSS, the correspondence between each VNFM in the management domain of the NFVO and the VNF managed by each VNFM, the NFVO determines, based on the correspondence between each VNFM in the management domain of the NFVO and the VNF managed by each VNFM, the VNFM that is used to manage the to-be-instantiated VNF. Based on the correspondence that is between the VNFM and the VNF and that is stored by the OSS, it may be ensured that the VNFM selected by the NFVO for the to-be-instantiated VNF meets service and virtualization deployment requirements of the OSS on the operator.

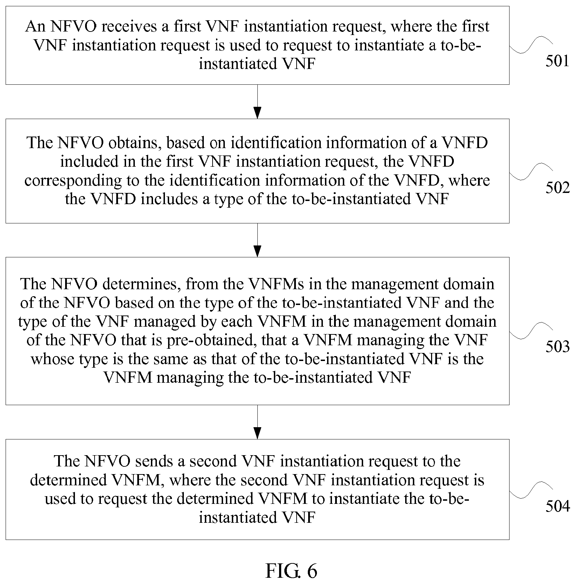

FIG. 6 is a flowchart of a VNFM determining method according to Embodiment 5 of the present invention. As shown in FIG. 6, the method in this embodiment may include the following steps.

Step 501: An NFVO receives a first VNF instantiation request, where the first VNF instantiation request is used to request to instantiate a to-be-instantiated VNF.

In this embodiment, the first VNF instantiation request includes identification information of a VNFD that is used to instantiate the to-be-instantiated VNF.

Step 502: The NFVO obtains, based on identification information of a VNFD included in the first VNF instantiation request, the VNFD corresponding to the identification information of the VNFD, where the VNFD includes a type of the to-be-instantiated VNF.

The type of the VNF is defined by a vendor of the VNF. The type of the VNF may be a type of a network element such as an MME or a PGW, or another type such as an EPC network element or an IMS network element.

Table 3 describes IEs included in the VNFD. It may be seen from Table 3 that the VNFD used to instantiate the to-be-instantiated VNF describes the type of the to-be-instantiated VNF.

**Table 3**

| **Attribute** | **Qualifier** | **Cardinality** | **Content** | **Description** |
|---|---|---|---|---|
| vnfType | M | 0..1 | String | The type of this VNF. |

Step 503: The NFVO determines, from the VNFMs in the management domain of the NFVO based on the type of the to-be-instantiated VNF and the type of the VNF managed by each VNFM in the management domain of the NFVO that is pre-obtained, that a VNFM managing the VNF whose type is the same as that of the to-be-instantiated VNF is the VNFM managing the to-be-instantiated VNF.

In this embodiment, the type of the VNF managed by the determined VNFM needs to include the type of the to-be-instantiated VNF.

In this embodiment, the NFVO may obtain the type of the VNF managed by each VNFM in the management domain of the NFVO in the following two manners:
In an implementation, the type of the VNF managed by each VNFM in the management domain of the NFVO is pre-configured. When providing the VNFM, the vendor of the VNFM indicates the type of the VNF that can be managed by the VNFM, and the NFVO records the type of the VNF managed by the VNFM.

In another implementation, the NFVO queries, from each VNFM in the management domain of the NFVO, the type of the VNF managed by each VNFM; or the NFVO receives a type that is of a VNF managed by each VNFM and that is reported by each VNFM in the management domain of the NFVO.

It should be noted that some types of VNFs managed by a plurality of VNFMs in the management domain of the NFVO may be the same. Therefore, in the management domain of the NFVO, the type of the VNF managed by a plurality of VNFMs may be the same as that of the to-be-instantiated VNF. In the management domain of the NFVO, when the type of the VNF managed by a plurality of VNFMs is the same as that of the to-be-instantiated VNF, the NFVO may select, according to a preset rule from a plurality of VNFMs that meet a condition, one VNFM to manage the to-be-instantiated VNF.

Step 504: The NFVO sends a second VNF instantiation request to the determined VNFM, where the second VNF instantiation request is used to request the determined VNFM to instantiate the to-be-instantiated VNF.

According to the method in this embodiment, the NFVO obtains the type of the VNF managed by each VNFM in the management domain. When the NFVO receives the first VNF instantiation request, the NFVO obtains the VNFD, and determines, from the VNFMs in the management domain of the NFVO based on the type of the to-be-instantiated VNF included in the VNFD, that a VNFM managing the VNF whose type is the same as that of the to-be-instantiated VNF is the VNFM managing the to-be-instantiated VNF. The method can ensure that in a G-VNFM scenario, a capability of the VNFM selected for the VNF matches the VNF type, and VNF life cycle management is performed correctly and efficiently.

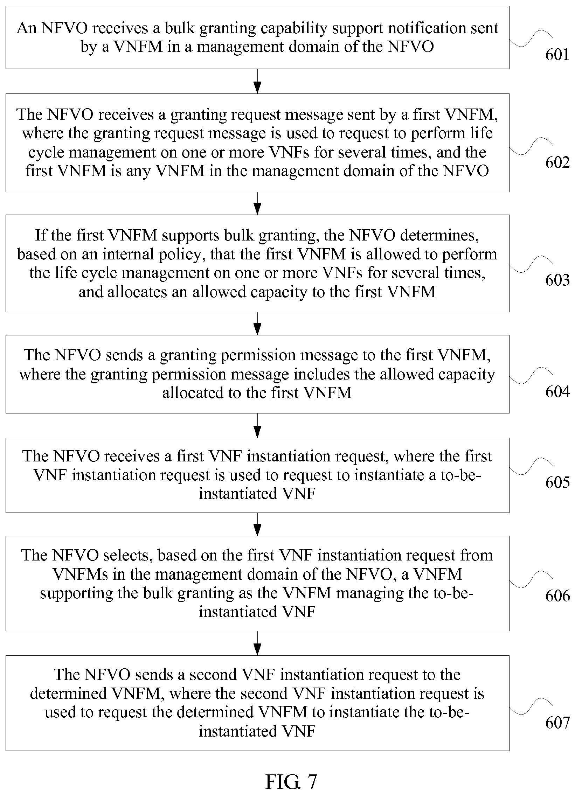

FIG. 7 is a flowchart of a VNFM determining method according to Embodiment 6 of the present invention. In this embodiment, the VNFM is determined mainly based on related features of NFVO bulk granting (bulk granting). A VNF life cycle operation granting (granting) function is a basic mechanism in the NFVO. Based on the mechanism, the NFVO allows the VNFM to perform a life cycle management operation and a resource management operation on a VNF. Every time before performing the VNF life cycle management operation, the VNFM sends a granting request to the NFVO, and the NFVO determines, based on an internal policy and a current resource status, whether to perform granting on the VNFM. As an enhancement and an extension based on granting, bulk granting allows the VNFM to apply to the NFVO for performing the VNF life cycle management operation on one or more VNFs for several times, with no need to send the granting request to the NFVO every time before performing the VNF life cycle management operation. As shown in FIG. 7, the method in this embodiment may include the following steps.

Step 601: The NFVO receives a bulk granting capability support notification sent by the VNFM in a management domain of the NFVO.

Step 602: The NFVO receives a granting request message sent by a first VNFM, where the granting request message is used to request to perform life cycle management on one or more VNFs for several times, and the first VNFM is any VNFM in the management domain of the NFVO.

Step 603: If the first VNFM supports bulk granting, the NFVO determines, based on the internal policy, that the first VNFM is allowed to perform the life cycle management on one or more VNFs for several times, and allocates an allowed capacity (permitted allowance) to the first VNFM.

Step 604: The NFVO sends a granting permission message to the first VNFM, where the granting permission message includes the allowed capacity allocated to the first VNFM.

After receiving the granting permission message, the first VNFM may perform life cycle management on a corresponding VNF.

Step 605: The NFVO receives a first VNF instantiation request, where the first VNF instantiation request is used to request to instantiate a to-be-instantiated VNF.

Step 606: The NFVO selects, according to the first VNF instantiation request from VNFMs in the management domain of the NFVO, a VNFM supporting the bulk granting as the VNFM managing the to-be-instantiated VNF.

If only one VNFM in the management domain of the NFVO meets the following condition: the NFVO has allowed the VNFM to perform the life cycle management on one or more VNFs for several times, and the VNFM supports the bulk granting, the NFVO determines that the VNFM is the VNFM managing the to-be-instantiated VNF.

If a plurality of VNFMs in the management domain of the NFVO meet the foregoing condition, the NFVO determines, from VNFMs in the management domain of the NFVO, at least two backup VNFMs supporting the bulk granting; and then the NFVO selects, based on an available capacity of the at least two backup VNFMs, a VNFM from the at least two backup VNFMs as the VNFM managing the to-be-instantiated VNF. The NFVO may select a VNFM with a relatively large available capacity as the VNFM managing the to-be-instantiated VNF. An available capacity of the backup VNFM is equal to a remaining capacity obtained by subtracting a used capacity from the allowed capacity allocated by the NFVO.

Step 607: The NFVO sends a second VNF instantiation request to the determined VNFM, where the second VNF instantiation request is used to request the determined VNFM to instantiate the to-be-instantiated VNF.

According to the method in this embodiment, the NFVO performs granting, in the bulk granting manner, on the VNFM for performing the life cycle management on one or more VNFs for several times. When the NFVO receives the first VNF instantiation request, the NFVO selects, from VNFMs in the management domain of the NFVO, one VNFM supporting the bulk granting as the VNFM managing the to-be-instantiated VNF. The selected VNFM can support the bulk granting, and has performed the life cycle management on the VNF for several times, thereby improving VNF life cycle management efficiency, and ensuring consistency of policies of the NFVO and the VNFM.

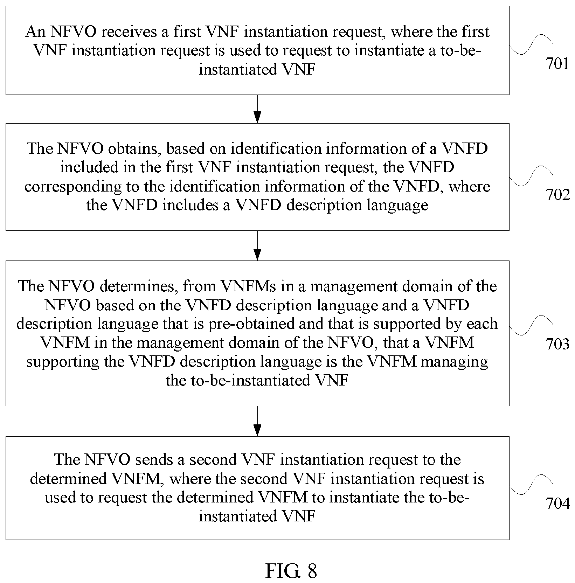

FIG. 8 is a flowchart of a VNFM determining method according to Embodiment 7 of the present invention. As shown in FIG. 8, the method in this embodiment may include the following steps.

Step 701: An NFVO receives a first VNF instantiation request, where the first VNF instantiation request is used to request to instantiate a to-be-instantiated VNF.

Step 702: The NFVO obtains, based on identification information of a VNFD included in the first VNF instantiation request, the VNFD corresponding to the identification information of the VNFD, where the VNFD includes a VNFD description language.

Step 703: The NFVO determines, from VNFMs in a management domain of the NFVO based on the VNFD description language and a VNFD description language that is pre-obtained and that is supported by each VNFM in the management domain of the NFVO, that a VNFM supporting the VNFD description language is the VNFM managing the to-be-instantiated VNF.

The NFVO pre-obtains the VNFD description language that is supported by each VNFM in the management domain. After obtaining the VNFD description language from the VNFD, the NFVO selects, based on the VNFD description language from the management domain, the VNFM supporting the VNFD description language as the VNFM managing the to-be-instantiated VNF.

The NFVO may obtain the VNFD description language supported by each VNFM in the following manner: The NFVO queries, from each VNFM in the management domain, the VNFD description language supported by each VNFM; or the NFVO receives the VNFD description language that is reported by each VNFM and that is supported by each VNFM.

Step 704: The NFVO sends a second VNF instantiation request to the determined VNFM, where the second VNF instantiation request is used to request the determined VNFM to instantiate the to-be-instantiated VNF.

In this embodiment, the NFVO pre-obtains the VNFD description language that is supported by each VNFM in the management domain. When receiving the first VNF instantiation request, the NFVO obtains the VNFD, where the VNFD includes the VNFD description language, and selects, from VNFMs in the management domain based on the VNFD description language included in the VNFD, a VNFM whose VNFD description language is the same as that included in the VNFD as the VNFM managing the to-be-instantiated VNF. The determined VNFM can support the VNFD description language, and therefore, it can be ensured that the VNFM reads and understands content described by the VNFD, and obtains a VNF deployment requirement, thereby ensuring that VNF deployment and life cycle management are performed correctly.

It should be noted that in the foregoing Embodiment 1 to Embodiment 7, the NFVO may alternatively receive an NS instantiation request sent by the OSS or the BSS. The NS instantiation request is used to request to instantiate a to-be-instantiated NS, and one NS includes one or more VNFs. Instantiating the to-be-instantiated NS is equivalent to instantiating VNFs included in the to-be-instantiated NS. Therefore, when the OSS or the BSS needs to instantiate the VNF, the VNF instantiation request or the NS instantiation request may be sent to the NFVO. The NFVO determines, based on the NS instantiation request, the to-be-instantiated VNF included in the to-be-instantiated NS and corresponding parameters such as identification information of a VNFD used to instantiate the to-be-instantiated VNF, an identifier of the to-be-instantiated VNF, a type of the to-be-instantiated VNF, and virtual resources required by the to-be-instantiated VNF (a computing resource, a storage resource, and a network resource).

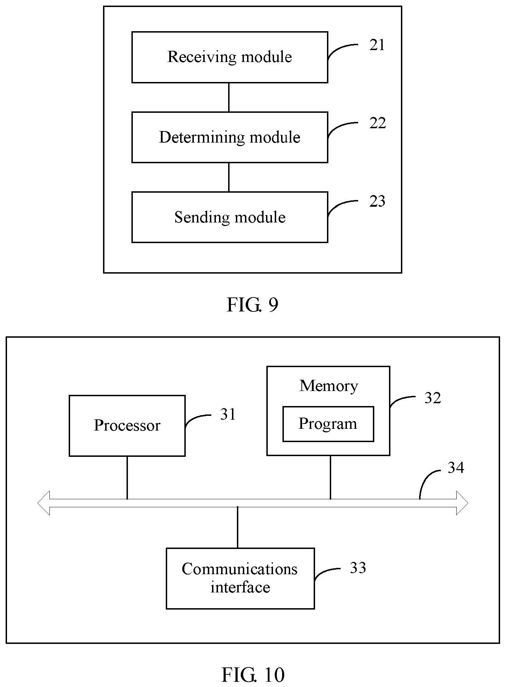

FIG. 9 is a schematic structural diagram of an NFVO according to Embodiment 8 of the present invention. As shown in FIG. 9, the NFVO includes: a receiving module 21, a determining module 22, and a sending module 23.

The receiving module 21 is configured to receive a first VNF instantiation request, where the first VNF instantiation request is used to request to instantiate a to-be-instantiated VNF.

The determining module 22 is configured to determine, from VNFMs in a management domain of the NFVO according to the first VNF instantiation request received by the receiving module 21, a VNFM managing the to-be-instantiated VNF.

The sending module 23 is configured to send a second VNF instantiation request to the VNFM determined by the determined module 22, where the second VNF instantiation request is used to request the determined VNFM to instantiate the to-be-instantiated VNF.

Function modules of the NFVO provided in this embodiment may be configured to perform the methods in Embodiment 1 to Embodiment 7. A specific implementation and a technical effect thereof are similar to those of the methods in Embodiment 1 to Embodiment 7, and reference may be made to related description of Embodiment 1 to Embodiment 7.

FIG. 10 is a schematic structural diagram of an NFVO according to Embodiment 9 of the present invention. As shown in FIG. 10, the NFVO includes: a processor 31, a memory 32, and a communications interface 33. The memory 32 is configured to store a program, and the communications interface 33 and the memory 32 are connected to the processor 31 by using a bus 34.

The communications interface 33 is configured to receive a first VNF instantiation request, where the first VNF instantiation request is used to request to instantiate a to-be-instantiated VNF.

The processor 31 is configured to determine, according to the first VNF instantiation request from VNFMs in a management domain of the NFVO, a VNFM managing a to-be-instantiated VNF.

The communications interface 33 is further configured to send a second VNF instantiation request to the determined VNFM, where the second VNF instantiation request is used to request the determined VNFM to instantiate the to-be-instantiated VNF.

Optionally, the processor 31 is specifically configured to: obtain, based on identification information of a VNFD included in the first VNF instantiation request, the VNFD corresponding to the identification information of the VNFD; and determine, from the VNFMs in the management domain of the NFVO based on the identification information of the VNFM managing the to-be-instantiated VNF included in the VNFD, that a VNFM corresponding to the identification information of the VNFM is the VNFM managing the to-be-instantiated VNF.

Optionally, the processor 31 is specifically configured to: obtain, based on identification information of a VNFD that is included in the first VNF instantiation request and that is used to instantiate the to-be-instantiated VNF, the VNFD corresponding to the identification information of the VNFD; and determine, based on a third identifier of the to-be-instantiated VNF included in the VNFD and vendor information of the to-be-instantiated VNF from the VNFMs in the management domain of the NFVO, the VNFM managing the to-be-instantiated VNF, where the third identifier is used to uniquely identify the VNFM of the to-be-instantiated VNF in a management domain of the vendor.

Optionally, the processor 31 is specifically configured to: obtain, based on identification information of a VNFD that is included in the first VNF instantiation request, the VNFD corresponding to the identification information of the VNFD; and determine, from the VNFMs in the management domain of the NFVO based on a type of the to-be-instantiated VNF and the vendor identification information of the to-be-instantiated VNF that are included in the VNFD, and a vendor of each VNFM in the management domain of the NFVO and a type of a VNF managed by each VNFM that are pre-obtained, the VNFM managing the to-be-instantiated VNF.

Optionally, the processor 31 is specifically configured to: obtain, based on identification information of a VNFD that is included in the first VNF instantiation request and that is used to instantiate the to-be-instantiated VNF, the VNFD corresponding to the identification information of the VNFD; and determine, from the VNFMs in the management domain of the NFVO based on the type of the to-be-instantiated VNF included in the VNFD and the type of the VNF managed by each VNFM in the management domain of the NFVO that is pre-obtained, that a VNFM managing the VNF whose type is the same as that of the to-be-instantiated VNF is the VNFM managing the to-be-instantiated VNF.

Optionally, the processor 31 is specifically configured to: obtain, by using an OSS, a correspondence between each VNFM in the management domain of the NFVO and the VNF managed by each VNFM; and determine, based on the correspondence between each VNFM in the management domain of the NFVO and the VNF managed by each VNFM, that a VNFM corresponding to the to-be-instantiated VNF is the VNFM managing the to-be-instantiated VNF.

Optionally, the processor 31 is specifically configured to: select, according to the first VNF instantiation request from VNFMs in the management domain of the NFVO, a VNFM that supports bulk granting as the VNFM managing the to-be-instantiated VNF.

Optionally, the processor 31 is specifically configured to: obtain, based on identification information of a VNFD that is included in the first VNF instantiation request, the VNFD corresponding to the identification information of the VNFD; and determine, from the VNFMs in the management domain of the NFVO based on a VNFD description language included in the VNFD and a VNFD description language that is pre-obtained and that is supported by each VNFM in the management domain of the NFVO, that a VNFM supporting the VNFD description language is the VNFM managing the to-be-instantiated VNF.

The NFVO provided in this embodiment may be configured to perform the methods in Embodiment 1 to Embodiment 7. A specific implementation and a technical effect thereof are similar to those of the methods in Embodiment 1 to Embodiment 7, and reference may be made to related description of Embodiment 1 to Embodiment 7.

## Claims

1. A virtualized network function manager, VNFM, determining method, comprising:
receiving (101), by a network functions virtualization orchestrator, NFVO, a first virtualized network function, VNF, instantiation request, wherein the first VNF instantiation request is used to request to instantiate a to-be-instantiated VNF;
determining (102), by the NFVO according to the first VNF instantiation request, a VNFM, managing the to-be-instantiated VNF from VNFMs in a management domain of the NFVO; and
sending (103), by the NFVO, a second VNF instantiation request to the determined VNFM, wherein the second VNF instantiation request is used to request the determined VNFM to instantiate the to-be-instantiated VNF, **characterized in that** it comprises:
wherein the determining, by the NFVO according to the first VNF instantiation request, a VNFM managing the to-be-instantiated VNF from VNFMs in a management domain of the NFVO comprises:
obtaining (202), by the NFVO, based on identification information of a virtualized network function descriptor, VNFD, the VNFD corresponding to the identification information of the VNFD, wherein the first VNF instantiation request comprises the identification information of the VNFD; and
determining, by the NFVO, based on the VNFD, the VNFM managing the to-be-instantiated VNF.

2. The method according to claim 1, wherein the VNFD comprises identification information of the VNFM managing the to-be-instantiated VNF; and the determining of the VNFM managing the to-be-instantiated VNF comprises:
determining, by the NFVO based on the identification information of the VNFM from the VNFMs in the management domain of the NFVO, that a VNFM corresponding to the identification information of the VNFM is the VNFM managing the to-be-instantiated VNF.

3. The method according to claim 1, wherein the VNFD comprises an identifier of the VNFM managing the to-be-instantiated VNF and vendor information of the to-be-instantiated VNF, and the identifier is used to uniquely identify the VNFM in a management domain of the vendor; and the determining of the VNFM managing the to-be-instantiated VNF comprises:
determining, by the NFVO based on the identifier of the to-be-instantiated VNF and the vendor information of the to-be-instantiated VNF from the VNFMs in the management domain of the NFVO, the VNFM managing the to-be-instantiated VNF.

4. The method according to claim 1, wherein the VNFD comprises a type of the to-be-instantiated VNF and vendor identification information of the to-be-instantiated VNF; and the determining of the VNFM managing the to-be-instantiated VNF comprises:
determining, by the NFVO based on the type of the to-be-instantiated VNF, the vendor identification information of the to-be-instantiated VNF, a pre-obtained vendor of each VNFM in the management domain of the NFVO, and a pre-obtained type of a VNF managed by each VNFM, the VNFM managing the to-be-instantiated VNF from the VNFMs in the management domain of the NFVO.

5. The method according to claim 1, wherein the VNFD comprises a type of the to-be-instantiated VNF; and the determining of the VNFM managing the to-be-instantiated VNF comprises:
determining, by the NFVO from the VNFMs in the management domain of the NFVO based on the type of the to-be-instantiated VNF and the pre-obtained type of the VNF managed by each VNFM in the management domain of the NFVO, that a VNFM managing the VNF whose type is the same as that of the to-be-instantiated VNF is the VNFM managing the to-be-instantiated VNF.

6. The method according to claim 1, wherein the VNFD comprises a VNFD description language; and the determining of the VNFM managing the to-be-instantiated VNF comprises:
determining, by the NFVO from the VNFMs in the management domain of the NFVO based on the VNFD description language and a VNFD description language that is pre-obtained and that is supported by each VNFM in the management domain of the NFVO, that a VNFM supporting the VNFD description language is the VNFM managing the to-be-instantiated VNF.

7. A network functions virtualization orchestrator, NFVO, comprising a processor (31) and a communications interface (33), wherein
the communications interface (33) is configured to receive a first virtualized network function, VNF, instantiation request, wherein the first VNF instantiation request is used to request to instantiate a to-be-instantiated VNF;
the processor (31) is configured to:
obtain, based on identification information of a virtualized network function descriptor, VNFD comprised in the first VNF instantiation request, the VNFD corresponding to the identification information of the VNFD, wherein the first VNF instantiation request comprises the identification information of the VNFD; and
determine, based on the VNFD, a virtualized network function manager, VNFM, managing the to-be-instantiated VNF from VNFMs in a management domain of the NFVO; and
the communications interface (33) is further configured to send a second VNF instantiation request to the determined VNFM, wherein the second VNF instantiation request is used to request the determined VNFM to instantiate the to-be-instantiated VNF.

8. The NFVO according to claim 7, wherein the VNFD comprises identification information of the VNFM managing the to-be-instantiated VNF; and the processor is specifically configured to:
determine, based on the identification information of the VNFM from the VNFMs in the management domain of the NFVO, that a VNFM corresponding to the identification information of the VNFM is the VNFM managing the to-be-instantiated VNF.

9. The NFVO according to claim 7, wherein the VNFD comprises an identifier of the VNFM managing the to-be-instantiated VNF and vendor information of the to-be-instantiated VNF, and the identifier is used to uniquely identify the VNFM of the to-be-instantiated VNF in a management domain of the vendor; and the processor is specifically configured to:
determine, based on the identifier of the to-be-instantiated VNF and the vendor information of the to-be-instantiated VNF from the VNFMs in the management domain of the NFVO, the VNFM managing the to-be-instantiated VNF.

10. The NFVO according to claim 7, wherein the VNFD comprises a type of the to-be-instantiated VNF and vendor identification information of the to-be-instantiated VNF; and the processor is specifically configured to:
determine, based on the type of the to-be-instantiated VNF, the vendor identification information of the to-be-instantiated VNF, a pre-obtained vendor of each VNFM in the management domain of the NFVO, and a pre-obtained type of a VNF managed by each VNFM, the VNFM managing the to-be-instantiated VNF from the VNFMs in the management domain of the NFVO.

11. The NFVO according to claim 7, wherein the VNFD comprises a type of the to-be-instantiated VNF; and the processor is specifically configured to:
determine, from the VNFMs in the management domain of the NFVO based on the type of the to-be-instantiated VNF and the pre-obtained type of the VNF managed by each VNFM in the management domain of the NFVO, that a VNFM managing the VNF whose type is the same as that of the to-be-instantiated VNF is the VNFM managing the to-be-instantiated VNF.

12. The NFVO according to claim 7, wherein the VNFD comprises a VNFD description language; and the processor is specifically configured to:
determine, from the VNFMs in the management domain of the NFVO based on the VNFD description language and a VNFD description language that is pre-obtained and that is supported by each VNFM in the management domain of the NFVO, that a VNFM supporting the VNFD description language is the VNFM managing the to-be-instantiated VNF.

## Patentansprüche

1. Bestimmungsverfahren für einen Verwalter von virtualisierten Netzwerkfunktionen (VNFM), umfassend:
Empfangen (101), durch einen Orchestrator für Netzwerkfunktionsvirtualisierung (NFVO), einer ersten Instanziierungsanforderung für eine virtualisierte Netzwerkfunktion (VNF), wobei die erste VNF-Instanziierungsanforderung dazu verwendet wird, die Instanziierung einer zu instanziierenden VNF anzufordern;
Bestimmen (102), durch den NFVO gemäß der ersten VNF-Instanziierungsanforderung, eines VNFM, der die zu instanziierende VNF verwaltet, aus VNFMs in einer Verwaltungsdomäne des NFVO; und
Senden (103), durch den NFVO, einer zweiten VNF-Instanziierungsanforderung an den bestimmten VNFM, wobei die zweite VNF-Instanziierungsanforderung dazu verwendet wird, anzufordern, dass der bestimmte VNFM die zu instanziierende VNF instanziiert, **dadurch gekennzeichnet, dass** es Folgendes umfasst: wobei das Bestimmen, durch den NFVO gemäß der ersten VNF-Instanziierungsanforderung, eines VNFM, der die zu instanziierende VNF verwaltet, aus VNFMs in einer Verwaltungsdomäne des NFVO Folgendes umfasst:
Erlangen (202), durch den NFVO, basierend auf Identifizierungsinformationen eines Deskriptors für eine virtualisierte Netzwerkfunktion (VNFD), des VNFD, der den Identifizierungsinformationen des VNFD entspricht, wobei die erste VNF-Instanziierungsanforderung die Identifizierungsinformationen des VNFD umfasst; und
Bestimmen, durch den NFVO, basierend auf dem VNFD, des VNFM, der die zu instanziierende VNF verwaltet.

2. Verfahren nach Anspruch 1, wobei der VNFD Identifizierungsinformationen des VNFM, der die zu instanziierende VNF verwaltet, umfasst; und wobei das Bestimmen des VNFM, der die zu instanziierende VNF verwaltet, Folgendes umfasst:
Bestimmen, durch den NFVO basierend auf den Identifizierungsinformationen des VNFM aus den VNFMs in der Verwaltungsdomäne des NFVO, dass ein VNFM, der den Identifizierungsinformationen des VNFM entspricht, der VNFM ist, der die zu instanziierende VNF verwaltet.

3. Verfahren nach Anspruch 1, wobei der VNFD eine Kennung des VNFM, der die zu instanziierende VNF verwaltet, und Anbieterinformationen der zu instanziierenden VNF umfasst und die Kennung dazu verwendet wird, den VNFM in einer Verwaltungsdomäne des Anbieters eindeutig zu identifizieren; und wobei das Bestimmen des VNFM, der die zu instanziierende VNF verwaltet, Folgendes umfasst:
Bestimmen, durch den NFVO basierend auf der Kennung der zu instanziierenden VNF und den Anbieterinformationen der zu instanziierenden VNF aus den VNFMs in der Verwaltungsdomäne des NFVO, des VNFM, der die zu instanziierende VNF verwaltet.

4. Verfahren nach Anspruch 1, wobei der VNFD einen Typ der zu instanziierenden VNF und Anbieteridentifizierungsinformationen der zu instanziierenden VNF umfasst; und wobei das Bestimmen des VNFM, der die zu instanziierende VNF verwaltet, Folgendes umfasst:
Bestimmen, durch den NFVO basierend auf dem Typ der zu instanziierenden VNF, den Anbieteridentifizierungsinformationen der zu instanziierenden VNF, einem vorab erlangten Anbieter jedes VNFM in der Verwaltungsdomäne des NFVO und einem vorab erlangten Typ einer VNF, die durch jeden VNFM verwaltet wird, des VNFM, der die zu instanziierende VNF verwaltet, aus den VNFMs in der Verwaltungsdomäne des NFVO.

5. Verfahren nach Anspruch 1, wobei der VNFD einen Typ der zu instanziierenden VNF umfasst; und wobei das Bestimmen des VNFM, der die zu instanziierende VNF verwaltet, Folgendes umfasst:
Bestimmen, durch den NFVO aus den VNFMs in der Verwaltungsdomäne des NFVO basierend auf dem Typ der zu instanziierenden VNF und dem vorab erlangten Typ der VNF, die durch jeden VNFM in der Verwaltungsdomäne des NFVO verwaltet wird, dass ein VNFM, der die VNF verwaltet, deren Typ derselbe wie derjenige der zu instanziierenden VNF ist, der VNFM ist, der die zu instanziierende VNF verwaltet.

6. Verfahren nach Anspruch 1, wobei der VNFD eine VNFD-Beschreibungssprache umfasst; und wobei das Bestimmen des VNFM, der die zu instanziierende VNF verwaltet, Folgendes umfasst:
Bestimmen, durch den NFVO aus den VNFMs in der Verwaltungsdomäne des NFVO basierend auf der VNFD-Beschreibungssprache und einer VNFD-Beschreibungssprache, die vorab erlangt wird und die durch jeden VNFM in der Verwaltungsdomäne des NFVO unterstützt wird, dass ein VNFM, der die VNFD-Beschreibungssprache unterstützt, der VNFM ist, der die zu instanziierende VNF verwaltet.

7. Orchestrator für Netzwerkfunktionsvirtualisierung (NFVO), umfassend einen Prozessor (31) und eine Kommunikationsschnittstelle (33), wobei
die Kommunikationsschnittstelle (33) konfiguriert ist zum Empfangen einer ersten Instanziierungsanforderung für eine virtualisierte Netzwerkfunktion (VNF), wobei die erste VNF-Instanziierungsanforderung dazu verwendet wird, die Instanziierung einer zu instanziierenden VNF anzufordern;
der Prozessor (31) konfiguriert ist zum:
Erlangen, basierend auf Identifizierungsinformationen eines Deskriptors für eine virtualisierte Netzwerkfunktion (VNFD), enthalten in der ersten VNF-Instanziierungsanforderung, des VNFD, der den Identifizierungsinformationen des VNFD entspricht, wobei die erste VNF-Instanziierungsanforderung die Identifizierungsinformationen des VNFD umfasst; und
Bestimmen, basierend auf dem VNFD, eines Verwalters für virtualisierte Netzwerkfunktionen (VNFM), der die zu instanziierende VNF verwaltet, aus VNFMs in einer Verwaltungsdomäne des NFVO; und
die Kommunikationsschnittstelle (33) ferner konfiguriert ist zum Senden einer zweiten VNF-Instanziierungsanforderung an den bestimmten VNFM, wobei die zweite VNF-Instanziierungsanforderung dazu verwendet wird, anzufordern, dass der bestimmte VNFM die zu instanziierende VNF instanziiert.

8. NFVO nach Anspruch 7, wobei der VNFD Identifizierungsinformationen des VNFM, der die zu instanziierende VNF verwaltet, umfasst; und wobei der Prozessor insbesondere konfiguriert ist zum:
Bestimmen, basierend auf den Identifizierungsinformationen des VNFM aus den VNFMs in der Verwaltungsdomäne des NFVO, dass ein VNFM, der den Identifizierungsinformationen des VNFM entspricht, der VNFM ist, der die zu instanziierende VNF verwaltet.

9. NFVO nach Anspruch 7, wobei der VNFD eine Kennung des VNFM, der die zu instanziierende VNF verwaltet, und Anbieterinformationen der zu instanziierenden VNF umfasst und die Kennung dazu verwendet wird, den VNFM der zu instanziierenden VNF in einer Verwaltungsdomäne des Anbieters eindeutig zu identifizieren; und der Prozessor insbesondere konfiguriert ist zum:
Bestimmen, basierend auf der Kennung der zu instanziierenden VNF und den Anbieterinformationen der zu instanziierenden VNF aus den VNFMs in der Verwaltungsdomäne des NFVO, des VNFM, der die zu instanziierende VNF verwaltet.

10. NFVO nach Anspruch 7, wobei der VNFD einen Typ der zu instanziierenden VNF und Anbieteridentifizierungsinformationen der zu instanziierenden VNF umfasst; und wobei der Prozessor insbesondere konfiguriert ist zum:
Bestimmen, basierend auf dem Typ der zu instanziierenden VNF, den Anbieteridentifizierungsinformationen der zu instanziierenden VNF, einem vorab erlangten Anbieter jedes VNFM in der Verwaltungsdomäne des NFVO und einem vorab erlangten Typ einer VNF, die durch jeden VNFM verwaltet wird, des VNFM, der die zu instanziierende VNF verwaltet, aus den VNFMs in der Verwaltungsdomäne des NFVO.

11. NFVO nach Anspruch 7, wobei der VNFD einen Typ der zu instanziierenden VNF umfasst; und wobei der Prozessor insbesondere konfiguriert ist zum:
Bestimmen, aus den VNFMs in der Verwaltungsdomäne des NFVO basierend auf dem Typ der zu instanziierenden VNF und dem vorab erlangten Typ der VNF, die durch jeden VNFM in der Verwaltungsdomäne des NFVO verwaltet wird, dass ein VNFM, der die VNF verwaltet, deren Typ derselbe wie derjenige der zu instanziierenden VNF ist, der VNFM ist, der die zu instanziierende VNF verwaltet.

12. NFVO nach Anspruch 7, wobei der VNFD eine VNFD-Beschreibungssprache umfasst; und wobei der Prozessor insbesondere konfiguriert ist zum:
Bestimmen, aus den VNFMs in der Verwaltungsdomäne des NFVO basierend auf der VNFD-Beschreibungssprache und einer VNFD-Beschreibungssprache, die vorab erlangt wird und die durch jeden VNFM in der Verwaltungsdomäne des NFVO unterstützt wird, dass ein VNFM, der die VNFD-Beschreibungssprache unterstützt, der VNFM ist, der die zu instanziierende VNF verwaltet.

## Revendications

1. Procédé de détermination de gestionnaire de fonction de réseau virtualisée, VNFM, comprenant :
la réception (101), par un orchestrateur de virtualisation de fonctions de réseau, NFVO, d'une première demande d'instanciation de fonction de réseau virtualisée, VNF, dans lequel la première demande d'instanciation de VNF est utilisée pour demander d'instancier une VNF à instancier ;
la détermination (102), par le NFVO selon la première demande d'instanciation de VNF, d'un VNFM, gérant la VNF à instancier parmi des VNFM dans un domaine de gestion du NFVO ; et
l'envoi (103), par le NFVO, d'une seconde demande d'instanciation de VNF au VNFM déterminé, dans lequel la seconde demande d'instanciation de VNF est utilisée pour demander au VNFM déterminé d'instancier la VNF à instancier, **caractérisé en ce qu'**il comprend :
dans lequel la détermination, par le NFVO selon la première demande d'instanciation de VNF, d'un VNFM gérant la VNF à instancier parmi des VNFM dans un domaine de gestion du NFVO comprend :
l'obtention (202), par le NFVO, en se basant sur des informations d'identification d'un descripteur de fonction de réseau virtualisée, VNFD, le VNFD correspondant aux informations d'identification du VNFD, dans lequel la première demande d'instanciation de VNF comprend les informations d'identification du VNFD ; et
la détermination, par le NFVO, en se basant sur le VNFD, du VNFM gérant la VNF à instancier.

2. Procédé selon la revendication 1, dans lequel le VNFD comprend des informations d'identification du VNFM gérant la VNF à instancier ; et la détermination du VNFM gérant le VNF à instancier comprend :
la détermination, par le NFVO se basant sur les informations d'identification du VNFM parmi les VNFM dans le domaine de gestion du NFVO, qu'un VNFM correspondant aux informations d'identification du VNFM est le VNFM gérant la VNF à instancier.

3. Procédé selon la revendication 1, dans lequel le VNFD comprend un identifiant du VNFM gérant la VNF à instancier et des informations de fournisseur de la VNF à instancier, et l'identifiant est utilisé pour identifier de manière unique le VNFM dans un domaine de gestion du fournisseur ; et la détermination du VNFM gérant la VNF à instancier comprend :
la détermination, par le NFVO se basant sur l'identifiant de la VNF à instancier et les informations de fournisseur de la VNF à instancier parmi des VNFM dans le domaine de gestion du NFVO, du VNFM gérant la VNF à instancier.

4. Procédé selon la revendication 1, dans lequel le VNFD comprend un type de la VNF à instancier et des informations d'identification de fournisseur de la VNF à instancier ; et la détermination du VNFM gérant la VNF à instancier comprend :
la détermination, par le NFVO se basant sur le type de la VNF à instancier, des informations d'identification de fournisseur de la VNF à instancier, d'un fournisseur préobtenu de chaque VNFM dans le domaine de gestion du NFVO, et d'un type préobtenu d'une VNF gérée par chaque VNFM, le VNFM gérant la VNF à instancier parmi les VNFM dans le domaine de gestion du NFVO.

5. Procédé selon la revendication 1, dans lequel le VNFD comprend un type de la VNF à instancier ; et la détermination du VNFM gérant la VNF à instancier comprend :
la détermination, par le NFVO parmi les VNFM dans le domaine de gestion du NFVO se basant sur le type de la VNF à instancier et
le type préobtenu de la VNF gérée par chaque VNFM dans le domaine de gestion du NFVO, qu'un VNFM gérant la VNF dont le type est le même que celui de la VNF à instancier est le VNFM gérant la VNF à instancier.

6. Procédé selon la revendication 1, dans lequel le VNFD comprend un langage de description de VNFD ; et la détermination du VNFM gérant la VNF à instancier comprend :
la détermination, par le NFVO parmi les VNFM dans le domaine de gestion du NFVO se basant sur le langage de description et un langage de description de VNFD qui est préobtenu et qui est pris en charge par chaque VNFM dans le domaine de gestion du NFVO, qu'un VNFM prenant en charge le langage de description de VNFD est le VNFM gérant la VNF à instancier.

7. Orchestrateur de virtualisation de fonctions de réseau, NFVO, comprenant un dispositif de traitement (31) et une interface de communication (33), dans lequel
l'interface de communication (33) est configurée pour recevoir une première demande d'instanciation de fonction de réseau virtualisée, VNF, dans lequel la première demande d'instanciation de VNF est utilisée pour demander d'instancier une VNF à instancier ;
le dispositif de traitement (31) est configuré pour :
obtenir, en se basant sur des informations d'identification d'un descripteur de fonction de réseau virtualisée, VNFD, contenues dans la première demande d'instanciation de VNF, le VNFD correspondant aux informations d'identification du VNFD, dans lequel la première demande d'instanciation de VNF comprend les informations d'identification du VNFD ; et
déterminer, en se basant sur le VNFD, un gestionnaire de fonction de réseau virtualisée, VNFM, gérant la VNF à instancier parmi des VNFM dans un domaine de gestion du NFVO ; et
l'interface de communication (33) est en outre configurée pour envoyer une seconde demande d'instanciation de VNF au VNFM déterminé, dans lequel la seconde demande d'instanciation de VNF est utilisée pour demander au VNFM d'instancier la VNF à instancier.

8. NFVO selon la revendication 7, dans lequel le VNFD comprend des informations d'identification du VNFM gérant la VNF à instancier ; et le dispositif de traitement est spécifiquement configuré pour :
déterminer, en se basant sur les informations d'identification du VNFM parmi les VNFM dans le domaine de gestion du NFVO, qu'un VNFM correspondant aux informations d'identification du VNFM est le VNFM gérant la VNF à instancier.

9. NFVO selon la revendication 7, dans lequel le VNFD comprend un identifiant du VNFM gérant la VNF à instancier et des informations de fournisseur de la VNF à instancier, et l'identifiant est utilisé pour identifier de manière unique le VNFM de la VNF à instancier dans un domaine de gestion du fournisseur ; et le dispositif de traitement est spécifiquement configuré pour :
déterminer, en se basant sur l'identifiant de la VNF à instancier et les informations de fournisseur de la VNF à instancier parmi les VNFM dans le domaine de gestion du NFVO, le VNFM gérant la VNF à instancier.

10. NFVO selon la revendication 7, dans lequel le VNFD comprend un type de la VNF à instancie et des informations d'identification de fournisseur de la VNF à instancier ; et le dispositif de traitement est spécifiquement configuré pour :
déterminer, en se basant sur le type de la VNF à instancier, les informations d'identification de fournisseur de la VNF à instancier, un fournisseur préobtenu de chaque VNFM dans le domaine de gestion du NFVO, et un type préobtenu d'une VNF gérée par chaque VNFM, le VNFM gérant la VNF à instancier parmi les VNFM dans le domaine de gestion du NFVO.

11. NFVO selon la revendication 7, dans lequel le VNFD comprend un type de la VNF à instancier ; et le dispositif de traitement est spécifiquement configuré pour :
déterminer, parmi les VNFM dans le domaine de gestion du NFVO se basant sur le type de la VNF à instancier et le type préobtenu de la VNF gérée par chaque VNFM dans le domaine de gestion de la NFVO, qu'un VNFM gérant la VNF dont le type est le même que celui de la VNF à instancier est le VNFM gérant la VNF à instancier.

12. NFVO selon la revendication 7, dans lequel le VNFD comprend un langage de description de VNFD ; et le dispositif de traitement est spécifiquement configuré pour :
déterminer, parmi les VNFM dans le domaine de gestion du NFVO se basant sur le langage de description de VNFD et un langage de description de VNFD qui est préobtenu et qui est pris en charge par chaque VNFM dans le domaine de gestion du NFVO, qu'un VNFM prenant en charge le langage de description de VNFD est le VNFM gérant la VNF à instancier.
